# EUROPÄISCHE PATENTANMELDUNG

(11) **EP 2 249 466 A2**
(43) Veröffentlichungstag der Anmeldung: **10.11.2010**
(21) Anmeldenummer: 10003144.2
(22) Anmeldetag: 24.03.2010
(51) Int. Cl.: H02K 21/18

(54) **Scheibenmotor mit elektromagnetischem Antrieb**

(30) Priorität: 16.04.2009 DE 102009017600
(71) Anmelder: Kutzke, Arthur, 18435 Stralsund (DE)
(72) Erfinder: Kutzke, Arthur, 18435 Stralsund (DE)

(57) **Zusammenfassung**

Die Erfindung betrifft den elektromagnetischen Antrieb eines Motors mit Dauermagneten, Magnetspulen und Rotoren. Aufgabe der Erfindung ist es, einen elektromagnetischen Antrieb auszuarbeiten, der umweltfreundlich arbeitet, ohne fossile Brennstoffe auskommt und trotzdem eine angemessene Leistung erbringt.

Der Antrieb besteht aus ein oder mehreren Scheiben (Rotoren), die mit Dauermagneten besetzt sind und einem Ständer, an dem mehrere Magnetspulen befestigt sind.

Nach dem Starten des Motors wird ein Gleichstrom in die Wicklung der Spulen geschickt, der diese in Elektromagneten verwandelt. Über eine Steuereinrichtung wird der Stromfluss in den Spulen geregelt, übt damit auf die Dauermagnete eine anziehende oder abstoßende Magnetkraft aus und wird in den Rotoren in Drehkraft umgesetzt.

Die Bezeichnung "Scheibenmotor mit elektromagnetischem Antrieb" ist treffend gewählt und charakterisiert den Motor. Die beigefügten Zeichnungen und die Funktionsweise veranschaulichen den Motor.

## Beschreibung

Der Motor besteht im Wesentliche aus zwei Komponenten: Mechanik und Elektronik.Drei verschiedene Energieformel (rotierende Energie der Masse, elektrische Energie und magnetische Energie) werden in diesem Motor vereint und bilden einen leistungsstarken Antrieb.

Auf einer gelagerten Welle können eine oder mehrere Scheiben montiert werden und drehen sich mit ihr in einem Gehäuse. Am Kranz der Scheibe befinden sich mehrere, jeweils zwei gegenüberliegende Dauermagnete mit ungleicher Polung, die sich also mit den Polen Nord-Süd, Süd-Nord usw. abwechseln (siehe Zeichnung).

Über den Scheiben, waagerecht in Achsrichtung der Welle montiert, sind mehrere Spulen mit Eisenkern angebracht und von den Dauermagneten durch einen Luftspalt getrennt (siehe Zeichnung). Befinden sich zur Leistungssteigerung zwei oder mehrere Scheiben auf der Welle, so müssen die Spulen versetzt zueinander montiert werden.

Nach dem Starten des Motors werden die Spulen/Elektromagnete durch einen Batteriestrom aktiviert und üben auf die Dauermagnete eine anziehende oder abstoßende Magnetkraft aus und somit als Drehkraft auf die Scheiben. Stehen sich Dauermagnete und Elektromagnete versetzt gegenüber (Nord-Süd, Süd-Nord). so wirken die Anziehungskräfte der Magnete.

Stehen sich Dauermagnete und Elektromagnete gegenüber, so wird die Spule/Elektromagnet durch eine Steurung umgepolt, d.h. Nord-Nord, Süd-Süd und übt auf die Dauermagnete eine abstoßende Wirkung aus. Die Umpolung ist ein Schaltvorgang, der eine gewisse Zeit benötigt. Um eine Blockade zu vermeiden, sollte die alte Polung vor dem oberen Scheitelpunkt abgeschaltet und die neue Polung nach dem oberen Scheitelpunkt eingeschaltet werden.

Die rotierende Energie der Masse (Scheibe) sorgt für die Einhaltung der Drehrichtung der Scheibe, glättet die Stöße, und die Elektromagnete üben auf das nun folgende Paar Dauermagnete eine anziehende Wirkung aus. So wiederholen sich die Vorgänge ständig, halten dadurch die Scheibe in Bewegung und erhöhen die Drehzahl. Eine Drehzahlregelung erfolgt durch das Abschalten ein oder mehrerer Spulen/Elektromagnete und der Stromverbrauch wird gesenkt.

Um die Betriebsdauer der Batterie zu erhöhen, könnte diese von Solarzellen gespeist werden. Beim Durchlaufen der Spulen durch die beiden Dauermagnete wird ein Induktionsstrom erzeugt, der ebenfalls der Batterie zugeführt werden könnte. Bei laufendem Motor liefert auch eine Lichtmaschine Strom.

Die Kraftwirkung der Magnete erfolgt immer zweipolig, d.h. Nord-Süd und Süd-Nord für anziehend und Nord-Nord und Süd-Süd für abstoßend. Die Kraftwirkung der Magnete wird bei dieser Konstruktion optimal genutzt und erhöht die Leistung.

## Patentansprüche

1. Scheibenmotor mit elektromagnetischem Antrieb, bestehend aus einem Läuferkern (Rotor und Welle) mit Dauermagneten auf einer gelagerten Antriebswelle und einem Ständer mit Magnetspulen, **dadurch gekennzeichnet, dass** eine Steuereinrichtung für den wechselnden Stromfluss der Magnetspulen, die von den Dauermagneten durch einen Luftspalt getrennt sind, diese so steuert, dass die magnetische Wirkung von anziehend (N-S) auf abstoßend (N-N) diese während der Rotation rechtzeitig umschaltet.

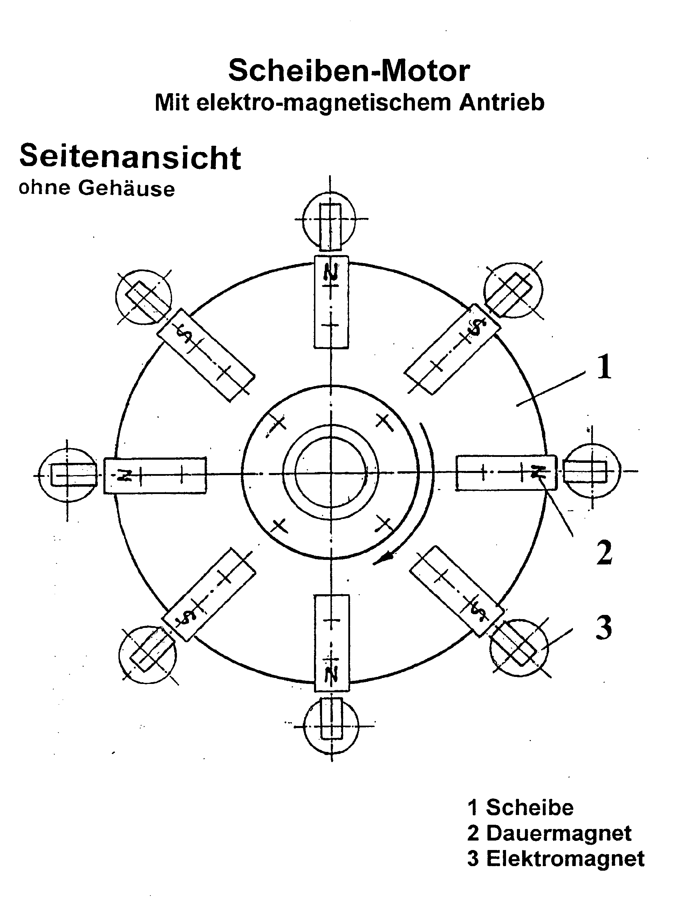

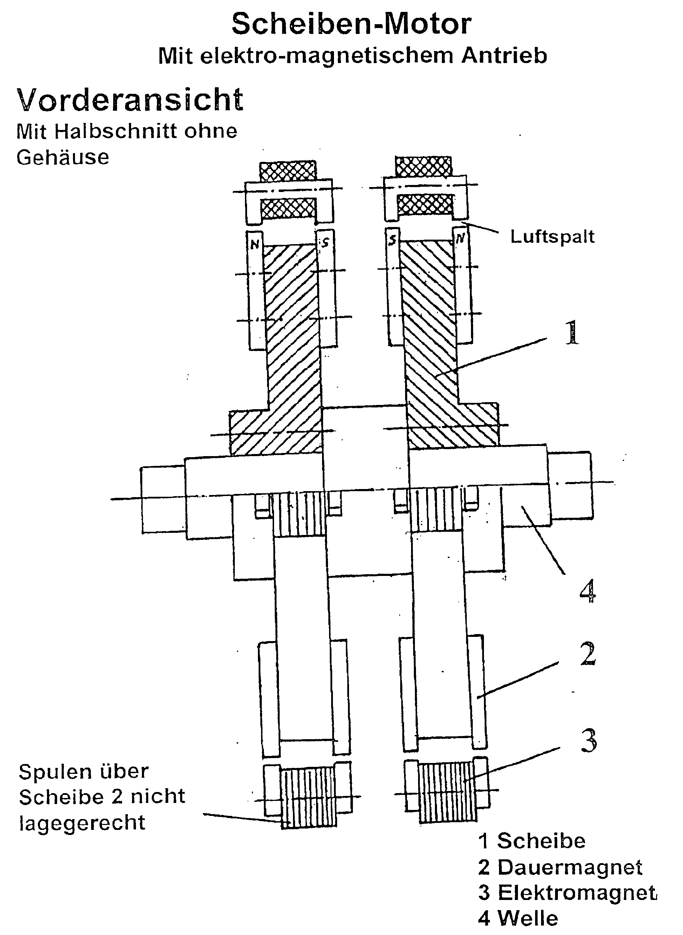

2. Scheibenmotor nach Anspruch 1, **dadurch gekennzeichnet, dass** beidseitig der Scheiben 1 Dauermagnete 2 mit wechselnder Polung montiert sind (siehe Figur 1 und 2).

3. Scheibenmotor nach Anspruch 1 und 2, **dadurch gekennzeichnet, dass** zur Erhöhung der Leistung mehrere Scheiben 1 auf der Antriebswelle 4 angebracht sind (siehe Figur 2).

4. Scheibenmotor nach Anspruch 1 bis 3, **dadurch gekennzeichnet, dass** waagerecht in Achsrichtung der Welle über den Dauermagneten 2 Magnetspulen 3 am Ständer befestigt sind und sich die Pole, getrennt durch den Luftspalt 5, direkt gegenüberstehen.

5. Scheibenmotor nach Anspruch 1 bis 4, **dadurch gekennzeichnet, dass** die Eisenkerne der Magnetspulen 3 abgewinkelt sind (Hufeisenform) und die Kraftwirkung der Magnete immer gleichzeitig zweipolig erfolgt, d.h. N-S und S-N für anziehend und N-N und S-S für abstoßend (siehe Figur 2).

6. Scheibenmotor nach Anspruch 1 bis 5, **dadurch gekennzeichnet, dass** die Magnetspulen 3 eine entsprechende periodisch wechselnde Polung zu den Dauermagneten 2 haben. Befinden sich Dauermagnete 2 im Drehsinn vor der Magnetspule 3, so übt sie auf diese einen Zug aus. Während der Rotation wird die Polarität der Magnetspule im geeigneten Zeitpunkt umgeschaltet.

7. Scheibenmotor nach Anspruch 1 bis 6, **dadurch gekennzeichnet, dass** die Magnetspule 3 eine Doppelwirkung ausübt. Nach dem Umschalten der Polarität übt sie auf das sich wegdrehende Paar Dauermagnete 2 einen Druck aus, während sie gleichzeitig das folgende Paar Dauermagnete 2 anzieht. Diese Doppelwirkung beruht auf der wechselnden Anordnung der Polarität der Dauermagnete.

8. Scheibenmotor nach Anspruch 1 bis 7, **dadurch gekennzeichnet, dass** bei mehreren Scheiben 1 die Magnetspulen 3 am Ständer versetzt angeordnet sind.

9. Scheibenmotor nach Anspruch 1 bis 8, **dadurch gekennzeichnet, dass** die Drehzahlsteuerung durch Abschalten einzelner Magnetspulen 3 erfolgt.

10. Scheibenmotor nach Anspruch 1 bis 9, **dadurch gekennzeichnet, dass** die Energie für die Magnetspulen 3 einer Batterie entnommen wird.

11. Scheibenmotor nach Anspruch 1 bis 10, **dadurch gekennzeichnet, dass** die Energie zur Verlägerung der Betriebsdauer der Batterie Solarzellen und einem Generator entnommen werden.
